# EUROPÄISCHE PATENTSCHRIFT

(11) **EP 0 430 144 B1**
(45) Veröffentlichungstag und Bekanntmachung des Hinweises auf die Patenterteilung: **08.02.1995**
(21) Anmeldenummer: 90122564.9
(22) Anmeldetag: 26.11.1990
(51) Int. Cl.: B01D 53/34, F23J 7/00, F23J 15/00

(54) **Verfahren und Vorrichtung zur Minderung der Stickoxid-Konzentration im Abgasstrom von Verbrennungsprozessen**
Method and apparatus for reducing the concentration of nitrogen oxides in waste gases of combustion processes
Procédé et dispositif pour réduire la concentration des oxydes d'azote dans les gaz d'échappement d'une combustion

(30) Priorität: 27.11.1989 DE 3939197
(43) Veröffentlichungstag der Anmeldung: 05.06.1991
(73) Patentinhaber: MARTIN GmbH für Umwelt- und Energietechnik, D-80807 München (DE)
(72) Erfinder: Martin, Johannes, Dipl.-Ing., D-8124 Seeshaupt (DE)
(74) Vertreter: Zmyj, Erwin, Dipl.-Ing., Dipl.-Wirtsch.-Ing.

(56) Entgegenhaltungen:
- EP-A- 0 253 324
- EP-A- 0 362 015
- DE-A- 3 339 844
- DE-C- 3 722 523
- US-A- 3 525 309
- US-A- 3 906 078
- US-A- 4 722 287
- US-A- 4 828 768

## Beschreibung

Die Erfindung bezieht sich auf ein Verfahren und eine Vorrichtung zur Minderung der Stickoxid-Konzentration im Abgasstrom von Verbrennungsprozessen.

Zur Minderung der Stickoxid-Konzentration im Abgasstrom von Verbrennungsprozessen ist es bekannt, verschiedene Chemikalien, z.B. Ammoniak, Salmiak, Harnstoff, Kalkstickstoff in den Abgasstrom einer Verbrennungsanlage einzuführen. Hauptaugenmerk bei all diesen Verfahren wurde bisher auf die Zuführung von Chemikalien in bestimmten Temperaturbereichen gelegt. Um hierbei zu brauchbaren Ergebnissen zu kommen, wurden die Chemikalien an mehreren Stellen eingeführt, wobei die Zusammensetzung und Konzentration der Chemikalienlösungen oder Chemikaliensuspenisonen auf die in den unterschiedlichen Einführungsebenen herrschenden Temperaturverhältnisse abgestimmt waren. Zur Erzielung einer guten Verteilung der eingeführten Chemikalien hat man eine große Anzahl von Einführungsstellen bzw. Einführungsdüsen vorgesehen. Diese Maßnahmen sind nicht nur konstruktiv aufwendig, sondern erfordern auch einen großen regelungstechnischen Aufwand.

Das durch die große Anzahl von Einführungsstellen entstandene Problem wird in gewisser Weise durch die aus der DE-C-37 22 523 bekannte Feuerungsanlage mit Düsen zum Einblasen von Ammoniak zur selektiven, nichtkatalytischen Rauchgasentstickung gemildert. Bei dieser bekannten Feuerungsanlage mit einem lotrechten Abgaszug steigen die Rauchgase unbeeinflußt gleichmäßig nach oben. Die unteren Enden der vorderen und hinteren Begrenzungswand des Abgaszuges sind im Sinne einer Querschnittsverengung geneigt, um die Rauchgase zu sammeln und in die lotrechte Richtung auszurichten. Innerhalb des gleichmäßig nach oben aufsteigenden Abgasstromes sind in der Höhe verstellbare Düsen für das Einsprühen von Behandlungsmedium vorgesehen, wobei die Verstellbarkeit der Düsen eine größere Anzahl fest installierter Düsenebenen überflüssig macht, wodurch die vielen Zuführungsleitungen zu den einzelnen Düsenebenen vermieden werden. Die Verstellbarkeit der Düsen ist vorgesehen, um entsprechend der Belastung der Feuerungsanlage die Einführungsebene den herrschenden Temperaturverhältnissen anpassen zu können. Um jedoch in diesem gleichmäßig aufsteigenden Rauchgasstrom eine ausreichende Reaktion zwischen dem Ammoniak und den Rauchgasen herbeizuführen, ist ein Düsenträger mit mehreren Verteilerrohren und vielen Ausblasedüsen vorgesehen, um eine flächendeckende Verteilung des Behandlungsmediums in dem Rauchgas zu erzielen, der obendrein in der Höhe verstellbar ist, was weiterhin noch einen hohen konstruktiven, meßtechnischen und regelungstechnischen Aufwand erfordert, um die Lage des Düsenträgers den herrschenden Temperaturverhältnissen anzupassen.

Bei einem aus der DE-A 35 10 669 bekannten Verfahren zum adsorptiven Entfernen von Schwefeloxiden und anderen schädlichen Stoffen aus Rauchgasen wird in einer außerhalb der Feuerungsanlage angeordneten Einrichtung zunächst in einer im Querschnitt kreisförmigen Eintrittskammer durch tangentialen Eintritt der Rauchgase eine rotationsförmige Strömung hervorgerufen, die im Inneren eine gewisse Turbulenz aufweist. An diese Kammer schließt sich eine Venturi-Einrichtung an, in deren Konfusor die Rauchgase verdichtet und senkrecht nach oben beschleunigt werden. An der Stelle höchster Beschleunigung und Verdichtung, welche durch die Kehle der Venturi-Einrichtung gebildet ist, wird das Behandlungsmedium eingeführt, worauf das Gemisch im anschließenden Diffusor entspannt und dann in einen aufsteigenden Rohrschacht geleitet wird, in welchem die eigentliche Reaktion eintritt. Durch die Verdichtung und Beschleunigung nach oben wird die spiralförmige Strömung auseinandergezogen, was zu einer gleichförmigen Strömung führt, so daß die gewisse Turbulenzerzeugung noch vor der Einführung des Mediums nicht mehr in dem erwünschten Maße wirksam ist. Die Verdichtungszone ist sehr kurz, so daß hier keine Reaktion eintritt, die erst in der vergleichmäßigten und beruhigten Strömung abläuft. Diese bekannte Behandlungsmethode findet in einer von der Feuerungsanlage unabhängigen Vorrichtung statt, so daß ein zusätzlicher konstruktiver Aufwand speziell für die Rauchgasbehandlung erforderlich wird.

Aus der US-A-4 722 287 ist eine Kohlenstaubfeuerung mit sich daran anschließendem senkrecht aufsteigendem Abgaszug bekannt, der in seinem oberen Bereich, in welchem der Abgasstrom in den nach unten gerichteten Abgaszug umgelenkt wird, eine im Längsschnitt im wesentlichen kegelstumpfförmige Nase aufweist, die sich nach oben erweiternd in den Abgaszug hineinragt, wobei die Symmetrieachse etwa unter einem Winkel von 45° geniegt ist, so daß die hintere, den absteigenden Abgaszug begrenzende Wand der Nase senkrecht steht. Durch diese Nasenausbildung tritt zwar eine Stauwirkung und damit verbunden eine Verdichtung des Abgasstromes ein, jedoch ist die Gesamtausbildung dieser Nase für eine weitgehend turbulenzfreie Umlenkung des Abgasstromes ausgebildet. Die Einführung eines Behandlungsmediums zur Verringerung des Schwefeloxidgehaltes erfolgt im Bereich des gleichförmig aufsteigenden Abgasstromes vor der späteren Verdichtung durch die Nase. Für die Einführung eines Behandlungsmediums sind an gegenüberliegenden Wänden des Abgaszuges Düsen vorgesehen, wobei die Düsen ein Innenrohr mit außen aufgesetztem Umlenkkörper aufweisen, um welches herum ein Ringkanal ausgebildet ist. Dabei wird das Behandlungsmedium sowohl durch den Ringkanal als auch durch das Innenrohr in den Abgasstrom eingeblasen. Aufgrund des auf dem Innenrohr sitzenden Umlenkkörpers wird der äußere ringförmige Strahl möglichst nahe an den Wänden des Abgaszuges geführt, während das Innenrohr das Behandlungsmedium weit in das Innere des Abgaszuges einbläst, wodurch eine flächendeckende Durchmischung über den gesamten Querschnitt des Abgaszuges erreicht werden soll. Hierfür sind nicht nur verhältnismäßig viele Düsen erforderlich, um eine flächendeckende Durchmischung zu erzielen, sondern die Einstellung der Düsen, die durch Verschiebung des mit dem Umlenkkörper versehenen Innenrohres gegenüber dem Außenrohr erfolgt, erfordert einen entsprechend hohen regelungstechnischen Aufwand.

Aufgabe der Erfindung ist es, einerseits den konstruktiven und regelungstechnischen Aufwand zu vermindern und andererseits die Minderung der Stickoxid-Konzentration noch weiter voranzutreiben.

Diese Aufgabe wird durch die im Anspruch 1 angegebenen Verfahrensschritte gelöst.

Dadurch, daß das Behandlungsmedium mit Beginn der starken Verdichtung des Abgasstromes eingeführt wird, ergibt sich eine höhere Dichte der durch die Chemikalien zu beeinflussenden Moleküle bezogen auf das Abgasvolumen, wodurch die Wahrscheinlichkeit einer Einwirkung der eingeführten Chemikalien auf die zu beeinflussenden Moleküle größer wird. In diesem Bereich der stetig zunehmenden Verdichtung tritt aufgrund der Querschnittsverengung und der damit verbundenen bogenförmigen Führung des Abgasstromes eine starke Querbeschleunigung auf, so daß hierdurch eine intensive Durchmischung der beiden Medien stattfinden kann. Die zunehmende Verdichtung mit zunehmender Querbeschleunigung führt also in diesem oberen Bereich des nach oben gerichteten Abgaszuges zu einer wesentlich verbesserten Reaktion zwischen dem Behandlungsmedium und dem Abgasstrom, wobei diese Reaktion dann noch durch die später einsetzende Entspannung mit einer wesentlichen Turbulenzerhöhung gesteigert wird. Die Schaffung besonders guter Reaktionsbedingungen, die durch die zunehmende Verdichtung und Querbeschleunigung verbunden mit einer guten Durchmischung und der anschließende Entspannung und Turbulenzerhöhung noch gesteigert wird, wird bei der vorliegenden Erfindung nicht durch eine große Anzahl von Düsen, sondern durch strömungstechnische Maßnahmen erzielt, die aufgrund einfacher baulicher Gestaltungen des Abgaszuges erreicht werden. Hierdurch ist es möglich die Anzahl der Einführstellen bzw. der Einführdüsen und den damit verbundenen eingangs erläuteren Aufwand zu vermindern.

Eine Verbesserung der Homogenisierung des Abgasstromes läßt sich in Weiterbildung der Erfindung dadurch erreichen, daß der Abgasstrom beim Eintritt in den Abgaszug durch Neigung der hinteren Begrenzungswand des Abgaszuges im Sinne einer Querschnittserweiterung schräg zur Lotrechten eingeführt und dann in einem weiteren Abschnitt bei leichter Verdichtung durch Querschnittsverminderung in die Lotrechte ausgerichtet wird, bevor er in den Abschnitt der starken Verdichtung eintritt. Durch die erfindungsgemäße Abgasführung, die bis in den nach abwärts gerichteten Abgaskanal einen im wesentlichen S-förmigen Verlauf aufweist, wobei der erste bogenförmige Verlauf bis zur Umlenkkante des aufsteigenden Abgaskanales in einem wesentlich sanfteren Bogen verläuft als der sich daran anschließende Umlenkbogen, wird durch die Querschnittserweiterung im untersten Bereich des Abgaszuges und durch die schräge Einführung des Abgasstromes in den Abgaskanal zunächst eine gewisse Beruhigung und Vergleichmäßigung des Abgases herbeigeführt.

Die Erzeugung der höchsten Turbulenz wird in vorteilhafter Weise durch Umlenken des Abgasstromes um das obere Ende der hinteren Begrenzungswand erreicht. Der bauliche Aufwand ist hierfür besonders gering, da es nur notwendig ist den oberen Teil der hinteren Begrenzungswand im Sinne einer Querschnittverengung zu neigen und in einer glatten Kante auslaufen zu lassen, wodurch sich ein scharfer Umlenkbogen ergibt, der zu der erwünschten Turbulenz führt. Aufgrund der Ausbildung einer Abrißkante der Strömung am oberen Ende der hinteren Begrenzungswand entfällt die bei bekannten Feuerungsanlagen üblicherweise zur Turbulenzunterdrückung vorgesehene Nase. Aufgrund der Schrägstellung des oberen Teiles der hinteren Begrenzungswand ergibt sich eine Querschnittserweiterung des nach unten gerichteten Abgaszuges, so daß der für die erwünschte Entspannung erforderliche Raum ohne zusätzliche bauliche Maßnahmen geschaffen ist. Da sich die Richtungsänderungen des Abgasstromes durch entsprechende Gestaltung des Feuerraumes bzw. Abgaszuges in einfacher Weise erzielen lassen, ist der Aufwand zur Erzielung einer besonders starken Turbulenz und der anschließenden Entspannung äußerst gering.

Es ist aber auch möglich die Turbulenz durch Einführen eines Zusatzgases zum Abgasstrom zu erzeugen.

Weiterhin ist es mit einfachen Mitteln möglich, die Turbulenz durch Einbauten innerhalb des Strömungsweges des Abgasstromes zu erzeugen.

Wenn in weiterer Ausgestaltung der Erfindung das Behandlungsmedium in wässriger Lösung mittels einer Einstoffdüse eingeführt wird, so wird hierdurch der Energieaufwand für das Einführen des Behandlungsmediums gegenüber der Einführung des Behandlungsmediums mittels Zweistoffdüsen abgesenkt, da kein zusätzliches Träger- und Zerstäubungsmedium erforderlich ist, welches für seine Bereitstellung einen entsprechenden Energieaufwand erfordert.

Um die Einwirkungsmöglichkeit des Behandlungsmediums auf die zu reduzierenden Moleküle zu steigern, ist es vorteilhaft, wenn das Behandlungsmedium in den Abgasstrom in Tröpfchen solcher Größe eingeführt wird, die eine explosionsartige Verdampfung des Lösungsmittels bzw. Trägermediums ermöglicht.

Eine Vorrichtung, d.h. eine Feuerungsanlage zur Durchführung des Verfahrens, mit einem über einem Feuerungsrost mit Brenngutaufgabe und Schlackenaustrag angeordneten, nach oben gerichteten Abgaszug, einen Umkehrraum für den Abgasstrom und einem nach unten gerichteten Abgaszug ist erfindungsgemäß dadurch gekennzeichnet, daß der aufsteigende Abgaszug in drei Abschnitte unterteilt ist, bei denen die dem Schlackenaustrag zugewandte Begrenzungswand im ersten Abschnitt im Sinne einer Querschnittserweiterung geneigt ist, im zweiten Abschnitt im wesentlichen lotrecht ausgeführt und im dritten Abschnitt ausgehend von der Lotrechten in Richtung auf die Brenngutaufgabe im Sinne einer Querschnittsverengung geneigt ist, daß der Querschnitt des ersten Abschnittes in Richtung auf den zweiten Abschnitt etwas erweitert ist und der Querschnitt des dritten Abschnittes gegenüber dem Querschnitt des zweiten Abschnittes stark verengt ist, und daß im unteren Bereich des dritten Abschnittes Sprühdüsen zur Einführung eines Behandlungsmediums angeordnet sind.

Durch diese einfache bauliche Maßnahme wird ausgehend vom Feuerungsrost bis hin zum nach abwärts gerichteten Abgaszug ein im wesentlichen S-förmiger Strömungsverlauf des Abgasstromes erreicht, wobei die Richtungsänderung im unteren Bereich des Abgaszuges weitaus weniger stark ausfällt, als dies im Umkehrraum der Fall ist. In Verbindung mit der starken Verengung des dritten Abschnittes des Abgaszuges wird durch die Richtungsumkehr eine starke Turbulenz und eine starke Durchmischung des Abgasstromes und damit die vorteilhaften Voraussetzungen für die Einwirkungen der Chemikalien auf das Stickstoffmonoxid geschaffen.

Wenn die vordere Wand, d. h. die der Brenngutaufgabe zugewandte Wand des Abgaszuges zur Vereinfachung der Konstruktion lotrecht ausgeführt ist, so empfiehlt es sich in Weiterbildung der Erfindung, am Anfang des ersten Abschnittes des Abgaszuges an der der Brenngutaufgabe zugewandten Begrenzungswand mindestens eine Einblaseöffnung für Sekundärluft vorzusehen, wodurch der im wesentlichen S-Strömungsverlauf des Abgasstromes unterstützt wird.

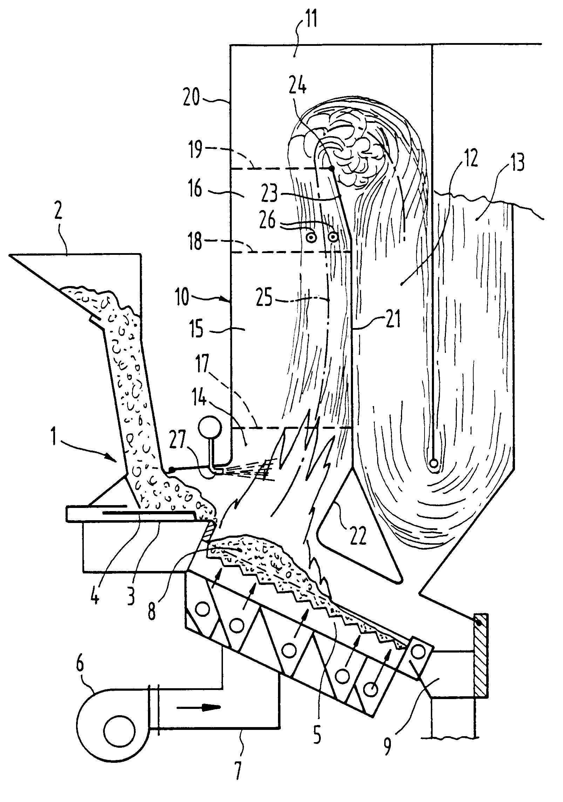

Die Erfindung wird nachfolgend anhand eines in der Zeichnung dargestellten Ausführungsbeispieles einer Feuerungsanlage näher erläutert, das in der beigefügten einzigen Figur gezeigt ist.

Wie aus der Zeichnung ersichtlich ist, die einen Schnitt durch eine Feuerungsanlage in stark schematisierter Form zeigt, weist diese eine insgesamt mit 1 bezeichnete Brenngutaufgabe auf, die einen Aufgabetrichter 2, einen Aufgabetisch 3 und darauf hin- und herbewegbaren Beschickkolben 4 umfaßt. Durch die Beschickkolben 4 wird das Brenngut, z. B. Müll auf einen Feuerungsrost 5 aufgegeben, der von unten mit Verbrennungsluft versorgt wird, die dem Rost mittels eines Gebläses 6 über eine Zuführleitung 7 zugeführt wird.

Die Verbrennung des mit 8 bezeichneten Brenngutes erfolgt auf dem Rost 5, wobei sich die Brennzone, die gleichzeitig die Entstehungszone des zu reduzierenden Stickstoffmonoxids ist, etwas über die Hälfte der Rostlänge erstreckt. Der verbleibende Teil des Feuerungsrostes dient zur Auskühlung der Schlacke, die am Ende des Feuerungsrostes in einen Schlackenaustrag 9 fällt.

Der Feuerungsrost 5 ist ausgehend von der Brenngutaufgabe 1 in Richtung auf den Schlackenaustrag 9 geneigt und vorzugsweise als Rückschubrost ausgebildet.

Über der Brennzone des Feuerungsrostes 5 erstreckt sich ein insgesamt mit 10 bezeichneter Abgaszug nach oben, der in einen Umkehrraum 11 mündet, an welchen sich ein nach unten gerichteter Abgaszug 12 anschließt. An diesen Abgaszug schließt sich wieder ein nach oben gerichteter Abgaszug 13 an, wobei aufgrund der starken Umlenkung die gröbsten Staubteile nach unten auf den Rost ausgetragen werden.

Der erste aufsteigende Abgaszug 10, der in seinem unteren Bereich die bei der Verbrennung entstehenden Flammen aufnimmt, dient gleichzeitig als Feuerraum und ist im wesentlichen in drei Abschnitte 14, 15 und 16 unterteilt, die durch die Linien 17, 18 und 19 begrenzt sind. Die der Brenngutaufgabe 1 zugewandte Begrenzungswand des Abgaszuges ist mit 20 und die rückwärtige, dem Schlackenaustrag 9 zugewandte Begrenzungswand ist mit 21 bezeichnet.

Die rückwärtige Begrenzungswand des Abgaszuges, die insgesamt mit 21 bezeichnet ist, ist im ersten Abschnitt 14 des Abgaszuges, in welchem sie mit 22 bezeichnet ist, ausgehend von der Lotrechten in Richtung auf den Schlackenaustrag 9 geneigt, so daß sich eine Erweiterung des Querschnittes des ersten Abschnittes 14 in Richtung auf den zweiten Abschnitt 15 ergibt. Der zweite Abschnitt 15 ist im wesentlichen durch parallele Wände begrenzt, während die Rückwand des dritten Abschnittes 16, die mit 23 bezeichnet ist, verhältnismäßig stark von der Lotrechten in Richtung auf die Brenngutaufgabe 1 geneigt ist, so daß sich eine zunehmende starke Verengung des Querschnittes des dritten Abschnittes 16 ergibt. Der Querschnitt des dritten Abschnittes 16 ist gegenüber dem Querschnitt des Abschnittes 15 wesentlich verengt. Hierdurch ergibt sich eine starke Verdichtung des Abgasstromes. Das Ende der rückwärtigen Begrenzungswand 23 ragt in den Umkehrraum 11 hinein. Der Abgasstrom wird dabei in scharfem Bogen um die Kante 24 der Begrenzungswand 23 herumgelenkt und tritt in den nach abwärts gerichteten Abgaszug 12 ein. Da die rückwärtige Begrenzungswand 23 gleichzeitig auch Begrenzungswand für den nach abwärts gerichteten Abgaszug 12 ist, ist dieser in seinem oberen Teil weiter als in seinem unteren Teil, wobei der obere Bereich des Abgaszuges 12 im Querschnitt wesentlich größer ist als der obere Bereich des dritten Abschnittes 16 des nach oben gerichteten Abgaszuges. Hierdurch tritt nach Umströmen der Kante 24 eine Entspannung und Beruhigung des Abgasstromes ein.

Aufgrund der beschriebenen konstruktiven Ausgestaltung ergibt sich ein im wesentlichen S-förmiger Strömungsverlauf des Abgasstromes ausgehend vom Verbrennungsrost bis hin zum nach unten gerichteten Abgaszug 12, wobei der Strömungsverlauf schematisch durch die strichpunktierte Linie 25 angedeutet ist. Dabei ist aufgrund dieses S-förmigen Verlaufes der Abgasstrom zwei Richtungsänderungen unterworfen, wobei die erste Richtungsänderung beim Übergang vom ersten Abschnitt 14 zum zweiten Abschnitt 15 erfolgt, während die zweite Richtungsänderung bereits im dritten Abschnitt 16 eingeleitet wird und sich dann im scharfen Bogen im Umkehrraum 11 fortsetzt. Der Strömungsverlauf ist also im unteren Bereich einer geringeren Richtungsänderung unterworfen als im oberen Bereich.

Im unteren Bereich des dritten Abschnittes 16, in welchem die Verdichtung des Abgasstromes aufgrund der geneigten Begrenzungswand 23 beginnt, sind Sprühdüsen 26 angeordnet, durch die in wässriger Lösung bzw. Suspension befindliche Chemikalie in den Abgaszug in fein verteilter Form eingesprüht werden, wobei die Sprühdüsen vorzugsweise als Einstoffdüsen ausgebildet sind. Die mittels der Düsen bewirkte Zerstäubung der wässrigen Chemikalienlösung bzw. Suspension führt zu einer explosionsartigen Verdampfung des Wasser, so daß unmittelbar nach der Eindüsung die eingebrachten Chemikalien in fester Form im Rauchgas vorhanden sind. Wie bereits eingangs erwähnt, kann Ammoniak, Salmiak, Harnstoff oder Kalkstickstoff in wässriger Lösung bzw. Suspension eingesprüht werden, um die Reduktion des Stickstoffmonoxids herbeizuführen. Aufgrund der im dritten Abschnitt 16 eingeleiteten Richtungsänderung in Verbindung mit der starken Verdichtung des Abgasstromes und der sehr starken Richtungsänderung um die Kante 24 herum, wird dem Abgasstrom eine besonders starke Turbulenz aufgeprägt, in welcher die Bedingungen für die Reduktion des Stickstoffmonoxids besonders gut sind, wobei durch die Verdichtung im Abschnitt 16 die Dichte der zu beeinflussenden Moleküle bezogen auf das Gasvolumen größer ist als im übrigen Abgasstrom, was ebenfalls zur Verbesserung der Bedingungen für die Reduktion des Stickstoffmonoxids führt. Aufgrund des bogenförmigen Verlaufs des Strömungsweges 25 im Abschnitt 15 werden die Gasmoleküle in Richtung auf die Begrenzungswand 23 beschleunigt, was in Verbindung mit der durch diese Begrenzungswand 23 eingeleiteten Richtungsumkehr zu einer Beschleunigung der Gasteilchen in die entgegengesetzte Richtung führt, wodurch eine starke Durchmischung der Gasmoleküle der eingeführten Chemikalien herbeigeführt wird. Die Verdichtung des Gasstromes und die Erzeugung einer besonders starken Turbulenz führen dann zu einer noch stärkeren Verminderung des Stickoxid-Gehaltes im Abgasstrom, als dies mit den bisher üblichen Verfahren möglich war.

Um den Abgasstrom unmittelbar über dem Feuerungsrost 5 in die gewünschte Richtung. d. h. in Richtung auf die Begrenzungswand 21 zu leiten, ist am unteren Ende der vorderen Begrenzungswand 20 eine Ausblasedüse 27 für Sekundärluft vorgesehen. Hierdurch kann die Begrenzungswand 20 als einfache lotrechte Begrenzungswand ausgeführt werden.

## Patentansprüche

1. Verfahren zur Minderung der Stickoxid-Konzentration im Abgasstrom von Verbrennungsprozessen, bei dem ein Behandlungsmedium in den aufsteigenden Abgasstrom innerhalb eines Abgaszuges der Feuerungsanlage eingeführt wird, in welchem der Abgasstrom durch Neigung des obersten Abschnittes der hinteren Begrenzungswand im Sinne einer starken Querschnittsverengung ausgelenkt wird und dabei einer Durchmischung durch Querbeschleunigung mit zunehmend stärker werdender Verdichtung unterworfen wird, wobei die Einführung des Behandlungsmediums im Bereich des Beginns der starken Verdichtung erfolgt, worauf in dem bereits mit Behandlungsmedium beladenen Abgasstrom am Ende der Verdichtung die höchste Turbulenz bei gleichzeitig beginnender Entspannung erzeugt wird.

2. Verfahren nach Anspruch 1, **dadurch gekennzeichnet,** daß der Abgasstrom beim Eintritt in den Abgaszug durch Neigung der hinteren Begrenzungswand des Abgaszuges im Sinne einer Querschnittserweiterung schräg zur Lotrechten eingeführt und dann in einem weiteren Abschnitt bei leichter Verdichtung durch Querschnittsverminderung in die Lotrechte ausgerichtet wird, bevor er in den Abschnitt der starken Verdichtung eintritt.

3. Verfahren nach Anspruch 1 oder 2, **dadurch gekennzeichnet,** daß die Erzeugung der höchsten Turbulenz durch Umlenken des Abgasstromes um das obere Ende der hinteren Begrenzungswand erfolgt.

4. Verfahren nach einem Ansprüche 1 bis 3, **dadurch gekennzeichnet,** daß die Turbulenz durch Einführung eines Zusatzgases zum Abgasstrom erzeugt wird.

5. Verfahren nach einem der Ansprüche 1 bis 4, **dadurch gekennzeichnet,** daß die Turbulenz durch Einbauten innerhalb des Strömungsweges des Abgasstromes erzeugt wird.

6. Verfahren nach einem der Ansprüche 1 bis 5, **dadurch gekennzeichnet,** daß das Behandlungsmedium in wässriger Lösung mittels einer Einstoffdüse eingeführt wird.

7. Verfahren nach einem der Ansprüche 1 bis 6, **dadurch gekennzeichnet,** daß das Behandlungsmedium in den Abgasstrom in Tröpfchen solcher Größe eingeführt wird, die eine explosionsartige Verdampfung des Lösungsmittels bzw. Trägermediums ermöglichen.

8. Vorrichtung zur Minderung der Stickoxid-Konzentration im Abgasstrom von Verbrennungsprozessen, mit einem über einem Feuerungsrost (5) mit Brenngutaufgabe (1) und Schlackenaustrag (9) angeordneten, nach oben ausgerichteten Abgaszug (10), einem Umkehrraum (11) für den Abgasstrom und einem nach unten gerichteten Abgaszug (12), **dadurch gekennzeichnet,** daß der aufsteigende Abgaszug (10) in drei Abschnitte (14, 15, 16) unterteilt ist, bei denen die dem Schlackenaustrag (9) Zugewandte Begrenzungswand (21) im ersten Abschnitt (14) im Sinne einer Querschnittserweiterung geneigt ist, im zweiten Abschnitt (15) lotrecht ausgeführt und im dritten Abschnitt (16) ausgehend von der Lotrechten in Richtung auf die Brenngutaufgabe (1) im Sinne einer Querschnittsverengung geneigt ist, daß der Querschnitt des ersten Abschnittes (14) in Richtung auf den zweiten Abschnitt (15) etwas erweitert ist und der Querschnitt des dritten Abschnittes (16) gegenüber dem Querschnitt des zweiten Abschnittes (15) stark verengt ist, und daß im unteren Bereich des dritten Abschnittes (16) Sprühdüsen zur Einführung eines Behandlungsmediums angeordnet sind.

9. Vorrichtung nach Anspruch 8, **dadurch gekennzeichnet,** daß am Anfang des ersten Abschnittes (14) des Abgaszuges (10) an der der Brenngutaufgabe (1) zugewandten Begrenzungswand (20) mindestens eine Einblasöffnung (27) für Sekundärluft vorgesehen ist.

## Claims

1. Method for reducing the concentration of nitrogen oxides in waste gases of combustion processes, in which a treating agent is introduced into the ascending waste gas stream within a waste gas offtake of the combustion plant, in which the waste gas stream is deflected by inclining the uppermost section of the rear boundary wall, in that the cross section is narrowed sharply, and is thus subjected to thorough mixing by transverse acceleration with increasingly high compression, the treating agent being introduced in the region of the beginning of high compression, after which the highest turbulence is produced in the waste gas stream already loaded with treating agent at the end of compression, with expansion beginning simultaneously.

2. Method according to claim 1, characterised in that the waste gas stream is introduced at an incline with respect to the vertical when it enters the waste gas offtake by inclining the rear boundary wall of the waste gas offtake, in that the cross section is widened, and is then aligned with the vertical in a further section with slight compression by a reduction of the cross section before it enters the section of high compression.

3. Method according to claim 1 or claim 2, characterised in that the highest turbulence is produced by deflecting the waste gas stream about the upper end of the rear boundary wall.

4. Method according to one of claims 1 to 3, characterised in that the turbulence is produced by introducing an additional gas into the waste gas stream.

5. Method according to one of claims 1 to 4, characterised in that the turbulence is produced by means of baffles within the flow path of the waste gas stream.

6. Method according to one of claims 1 to 5, characterised in that the treating agent is introduced in aqueous solution by means of a single-component nozzle.

7. Method according to one of claims 1 to 6, characterised in that the treating agent is introduced into the waste gas stream in drops of such a size as to allow for explosion-like evaporation of the solvent or carrier medium.

8. Apparatus for reducing the concentration of nitrogen oxides in waste gases of combustion processes, comprising an upwardly directed waste gas offtake (10) arranged above a grate (5) with an inlet (1) for the material to be burnt and a slag outlet (9), a reversing space (11) for the waste gas stream and a downwardly directed waste gas offtake (12), characterised in that the ascending waste gas offtake (10) is divided into three sections (14, 15, 16), in which the boundary wall (21) directed towards the slag outlet (9) is inclined in the first section (14), in that the cross section is widened, is vertical in the second section (15) and, in the third section (16), departing from the vertical, is inclined in the direction of the inlet (1) for the material to be burnt, in that the cross section is narrowed, that the cross section of the first section (14) is slightly widened in the direction of the second section (15) and the cross section of the third section (16) is narrowed sharply with respect to the cross section of the second section (15), and that spray nozzles for the introduction of a treating agent are arranged in the lower region of the third section (16).

9. Apparatus according to claim 8, characterised in that at least one injection opening (27) for secondary air is provided at the beginning of the first section (14) of the waste gas offtake (10) at the boundary wall (20) directed towards the inlet (1) for the material to be burnt.

## Revendications

1. Procédé pour réduire la concentration en oxydes d'azote dans le flux des effluents gazeux de processus de combustion, dans lequel un milieu de traitement est introduit dans le flux ascendant des effluents gazeux à l'intérieur d'un carneau d'effluents gazeux de l'installation de combustion, carneau dans lequel le flux des effluents gazeux est orienté par l'inclinaison, dans le sens d'un rétrécissement de section transversale, du tronçon supérieur de la paroi de délimitation arrière, et dans lequel il est soumis à un mélange par une accélération transversale avec une compression devenant de plus en plus forte, l'introduction du milieu de traitement étant effectuée dans la zone du début de forte compression, la turbulence la plus forte étant engendrée dans le flux des effluents gazeux déjà chargé de produits chimiques à la fin de la compression, qui est simultanément le début de la détente.

2. Procédé selon la revendication 1, caractérisé en ce que, lorsque le flux des effluents gazeux pénètre dans le carneau, il est introduit obliquement par rapport à la verticale par l'inclinaison, dans le sens d'un élargissement de la section transversale, de la paroi de délimitation arrière du carneau des effluents gazeux, et en ce que, dans un autre tronçon, il est orienté à la verticale, tout en étant faiblement comprimé, par une réduction de la section transversale, avant de pénétrer dans le tronçon de la forte compression.

3. Procédé selon l'une des revendications 1 ou 2, caractérisé en ce que la turbulence la plus forte est engendrée par la déviation du flux des effluents gazeux autour de l'extrémité supérieure de la paroi de délimitation arrière.

4. Procédé selon l'une quelconque des revendications 1 à 3, caractérisé en ce que la turbulence est engendrée par l'introduction d'un gaz d'appoint dans le flux des effluents gazeux.

5. Procédé selon l'une quelconque des revendications 1 à 4, caractérisé en ce que la turbulence est engendrée par des chicanes placées à l'intérieur de la voie du courant du flux des effluents gazeux.

6. Procédé selon l'une quelconque des revendications 1 à 5, caractérisé en ce que le milieu de traitement est introduit en solution aqueuse au moyen d'une buse à un seul constituant.

7. Procédé selon l'une quelconque des revendications 1 à 6, caractérisé en ce que le milieu de traitement est introduit dans le flux des effluents gazeux en gouttelettes d'une grosseur telle qu'elles permettent une évaporation sous forme d'explosion du solvant ou du milieu porteur.

8. Dispositif pour réduire la concentration en oxydes d'azote dans le flux des effluents gazeux de processus de combustion, avec un carneau (10) d'effluents gazeux orienté vers le haut, qui est disposé au-dessus d'une grille de foyer (5) comportant un dispositif d'alimentation (1) de la matière à brûler et une évacuation (9) des mâchefers, un espace d'inversion (11) pour le flux des effluents gazeux et un carneau (12) d'effluents gazeux orienté vers le bas, caractérisé en ce que le carneau (10) d'effluents gazeux ascendant est subdivisé en trois tronçons (14, 15, 16), dans lesquels la paroi de délimitation (21) tournée vers l'évacuation (9) des mâchefers est inclinée dans le sens d'un élargissement de section transversale dans le premier tronçon (14), réalisée verticalement dans le deuxième tronçon (15), et dans le troisième tronçon (16) elle est inclinée dans le sens d'un rétrécissement de la section transversale par rapport à la verticale en direction du dispositif d'alimentation (1) de la matière à brûler, en ce que la section transversale du premier tronçon (14) est légèrement élargie en direction du deuxième tronçon (15), et que la section transversale du troisième tronçon (16) est fortement rétrécie par rapport à la section transversale du deuxième tronçon (15), et en ce que des buses de pulvérisation pour l'introduction d'un milieu de traitement sont disposées dans la partie inférieure du troisième tronçon (16).

9. Dispositif selon la revendication 8, caractérisé en ce que, au début du premier tronçon (14) du carneau (10) des effluents gazeux, il est prévu au moins un orifice d'insufflation (27) d'air secondaire dans la paroi de délimitation (20) faisant face au dispositif d'alimentation (1) de la matière à brûler.
